# EUROPEAN PATENT SPECIFICATION

(11) **EP 3 505 287 B1**
(45) Date of publication and mention of the grant of the patent: **18.11.2026**
(21) Application number: 18212185.5
(22) Date of filing: 13.12.2018
(51) Int. Cl.: B23K 9/095

(54) **A WELDING TORCH, A SYSTEM WITH SUCH A WELDING TORCH AND A METHOD FOR CONTROLLING SUCH A SYSTEM**
SCHWEISSBRENNER, SYSTEM MIT SOLCH EINEM SCHWEISSBRENNER UND VERFAHREN ZUR STEUERUNG SOLCH EINES SYSTEMS
TORCHE DE SOUDAGE, SYSTÈME AVEC UNE TELLE TORCHE DE SOUDAGE ET PROCÉDÉ DE COMMANDE D'UN TEL SYSTÈME

(30) Priority: 15.12.2017 CN 201711347287
(43) Date of publication of application: 03.07.2019
(73) Proprietor: EWM High Technology (Kunshan) Co., Ltd., 215300 Kunshan, Jiangsu (CN)
(72) Inventor: ZENG, Michael, Kunshan City, Jiangsu 215300 (CN)
(74) Representative: Cohausz & Florack

(56) References cited:
- WO-A1-2017/036883
- WO-A2-2014/140746
- US-A1- 2014 332 514

## Description

The present invention relates to a welding torch configured to be utilized in a welding operation, in particular to establish an electric welding arc between the welding torch and a workpiece. The invention also relates to a system comprising such a welding torch and a welding system. The invention further relates to a method for controlling a system comprising a welding system and a welding torch connected thereto (see for example WO 2014/140746, on which the preamble of claims 1 and 13 is based).

Welding torches for arc welding are generally known in the art. For performing an arc welding operation, a welding torch is connected to a welding system, typically by a hose package. The hose package may for example comprise a so-called EURO-connector (German: EURO-Zentralanschluss) which is a standardized connector for attaching welding torches to a welding system. The welding system provides the welding power for the welding process so that an electric arc can be established between the welding torch and a workpiece to perform the welding process. Furthermore, the welding system may provide a shielding gas, which may be an inert gas for tungsten inert gas (TIG) welding or metal inert gas (MIG) welding, or an active gas for metal active gas (MAG) welding.

For gas metal arc welding (GMAW), i.e. MIG or MAG welding, the welding system further provides a welding wire as the consumable electrode. To this end, the welding system usually comprises a wire feeder which may form a single device together with the welding power source or which may form a separate unit. In the latter case, the welding torch is usually connected to the wire feeder, in particular by means of the hose package, and the wire feeder is connected to the welding power source by means of a power cable, so that the welding power provided by the welding power source can be transferred to the welding torch through the wire feeder.

Arc welding is generally a complex process and the quality of the welding seam and of the welded workpiece depends on several factors. For example, the welding current amplitude, voltage and profile, the wire material, the wire feeder speed and the shielding gas flow should be adapted to, for example, the materials of the workpiece to be welded, their structure and/or the positioning and kind of the welding joint (butt seam, T seam, spot welding etc.) in order to achieve the required result. Furthermore, multiple welding processes may have to be carried out in a predefined order on a workpiece to achieve or to prevent a particular deformation of the workpiece.

In the context of increasing quality and production speed requirements to meet concerning the production of welded workpieces, efforts have been made in the past decades in order to improve the reliability of welding processes and devices.

For instance, there exist welding power units with programmable welding modes so that a welder may recall a pre-programmed set of welding parameters for a particular welding joint. A welder then only has to remind the program number for a particular welding joint rather than all relevant welding parameters. However, if there are a significant number of different welding operations and a broad program number range, this can still be complicated and fault-prone.

In order to overcome this problem, a system has been proposed in which the workpiece to be welded, the welding joints to be performed on the workpiece, in particular in a given order, and associated welding parameters to be used are stored in an electronic data base. The welder can access this information for example by scanning with a bar code scanner integrated in the welding power source a bar code on a workpiece to be welded or on a separate welding information sheet, which bar code contains an identification symbol which may for example uniquely identify said workpiece or a welding operation to be performed on the workpiece. The proposed system is then configured such that the welding parameters associated to the workpiece and/or the welding operation identified by the identification symbol are automatically retrieved from the electronic data base and the welding machine and/or wire feeder operation parameters are automatically set.

Although such welding systems significantly facilitate welding processes and improve their reliability, they may be cumbersome to use in certain welding situations that occur in practice. For example, if welding operations have to be performed in a larger area, e.g. at several positions of a ship in a dockyard, the welder may use a long hose package so that he can walk between the different welding positions with the welding torch without having to move around the welding power source or the wire feeder. Thus, the working position(s) of the welder may be 40 m or more away from the welding power source or the wire feeder so that the welder would have to walk a long distance to scan a next workpiece bar code at the welding power source or at the wire feeder.

In view of this, the object of the present invention is to provide a welding torch, a system, and a method with which a welding process can be performed more reliably and in more a practical and comfortable manner.

This object is achieved according to the invention with a welding torch as defined in claim 1.

The object named above is further achieved according to the invention with a system comprising a welding system and a welding torch configured for being connected to the welding system for performing a welding operation as defined in claim 5.

Furthermore the object named above is achieved according to the invention with a method for controlling a system comprising a welding system and a welding torch connected thereto as defined in claim 13.

By means of the communication means provided in the welding torch, a welder may scan a bar code on a workpiece with a handheld device, for example with his smartphone, and transfer the identification symbol coded in the bar code over the wireless communication connection to the communication means which then over the second communication connection transfer the identification symbol to the welding system so that the identification symbol can be evaluated on the welding system or on a server connected thereto. The welding torch and the system described above thus allow using the welding torch as a relay for transferring identification symbols to the control unit of the welding system. In this way, there is no need for the welder to walk to the welding system in order to scan the bar code. Accordingly, the first device may in particular be a handheld device, for example a smartphone, and the second device may in particular be a device of a welding system, for example a welding power source or a wire feeder. In particular, the communication means may be configured to establish the second communication connection with a control unit of the welding power source or the wire feeder, respectively.

Providing the communication means in the welding torch is advantageous over integrating a bar code scanner in the welding torch as the latter is complicated due to the high working temperatures, the welding smoke and the rough working conditions at the welding torch and as this would significantly increase the costs of a welding torch.

Providing the communication means in the welding torch is also advantageous over providing for a direct communication connection between the handheld device and the welding system as it has turned out that working environments for welders may often not allow wireless communication connections over larger distances, for example due to walls or metal installations between the position of the welder and the position of the welding power source or of the wire feeder which lead to poor reception of, e.g. mobile phone or WiFi signals from distant wireless communication hardware.

The welding torch comprises communication means which are configured to establish a first wireless communication connection and a second wired communication connection. To this end, the communication means may in particular comprise a first communication module for establishing the first wireless connection and a second communication module for establishing the second wired connection. The first communication module may for example be configured to establish a Bluetooth, an NFC or a WiFi communication connection.

According to the present invention, the communication means are further configured to receive an identification symbol over the first communication connection and are also configured to transmit a message over the first communication connection.

According to the present invention, the communication means are further configured to transmit an identification symbol over the second communication connection and are also configured to receive a message over the second communication connection.

Sending or receiving the identification symbol in particular comprises sending or receiving a signal in which the identification symbol is coded. In particular the identification symbol may be coded in the communication signal according to a communication protocol and optionally also according to a further coding algorithm, e.g. for encryption or data compression.

The identification symbol is preferably assigned to a workpiece to be welded or to a welding operation to be performed on the workpiece. In particular, the identification symbol may be coded in a machine-readable code, in particular a one- or two-dimensions barcode, on a workpiece or on a welding information sheet associated to the workpiece. Preferably, the identification symbol contains information about the identity of a workpiece. For example, the identification symbol may comprise a code, such as a numerical or alphanumerical code, that uniquely identifies a workpiece or a next welding process on a workpiece.

It is also conceivable that the identification symbol contains information about the identity of a user of the welding torch. In particular, the welding torch may receive over the first communication connection a user identification number and forward said identification number to the welding system. The welding system may then be configured to store the user identification number together with welding parameters of a welding process or to allow use of the welding system only within the limits of an authorization level of the user identified by the identification number. In this way, the user may for example register on a welding system via the welding torch and need not walk to the welding system for registering.

The system comprises a welding system. The welding system in particular comprises a welding power source for providing the welding power. The welding system may further comprise a wire feeder, a shielding gas source and/or further components for performing a welding operation.

The welding system comprises a control unit. The control unit may be integrated, for example, in the welding power source or in a wire feeder of the welding system. The control unit preferably comprises at least one processor and a memory on which a computer program is stored to perform the communication with the communication means of the welding torch.

In the following, several embodiments of the welding torch, of the system and of the method will be described. The embodiments may individually be applied to the welding torch, to the system and to the method. The embodiments may further be combined with each other.

According to a further embodiment, said first communication connection is a short range connection, in particular a connection with a range of less than 100 m, preferably less than 40 m, in particular less than 25 m. Provision of the communication means in the welding torch allows to use short range connections also in situations in which the welding system is too far away from the position of the welder. Furthermore, a short range connection is more reliable in situations in which longer range connections such as mobile phone or WiFi signals are weakened by walls or metal parts in the environment.

The communication connection may be established via a specified short range communication technology, such as Bluetooth, Near-Field Communication (NFC), Radio-frequency identification (RFID) or a specified optical connection, e.g. an infrared connection. In this way, the production costs of the welding torch are kept low since components for establishing standardized communication connections are widely available. Moreover, a majority of state-of-the-art handheld devices like smartphones are typically equipped with communications means operating in a short-range standard so that the welding torch may communicate wireless with a lot of different devices, so that the commerciality of the welding torch is significantly enhanced. The communication means of the welding torch may be both a slave and/or a master towards the first device, with which a wireless communication connection, for example a Bluetooth communication connection, is established.

According to a further embodiment, the welding torch preferably comprises a data interface configured for being connected to a control unit interface of a control unit of a welding system, wherein the communication means are configured to establish the second communication connection via said data interface. According to a corresponding embodiment of the system, the control unit of the welding system comprises a control unit interface and the data interface of the welding torch is configured for being connected to the control unit interface of the control unit of the welding system.

In particular, the welding torch may be equipped with a hose package comprising a connector, preferably a EURO-connector, for connecting the welding torch to a device of the welding system. The connector may comprise a plurality of male and/or female plugs to establish a plurality of connections, in particular for the welding current, data transfer, optionally shielding gas and optionally welding wire, between the device of the welding system and the welding torch. By using a standard connector like the EURO-connector the welding torch is compatible to various welding systems so that the application field of the welding device is widened. For example, the hose package contains conductor connections configured for connecting the data interface of the welding torch with the control unit interface of the control unit of the welding system.

According to a further embodiment, the data interface comprises at most two conductor connections for connecting with the control unit interface. In a further embodiment of the system, the control unit interface of the control unit of the welding system comprises at most two conductor connections for connecting with the data interface of the welding torch.

Conventional welding torches usually comprise a torch trigger in the form of a button switch at the welding torch with is connectable to the control unit interface by two conductor connections so that the control unit may detect whether the switch is open or close and may start, continue or stop a welding process depending on the switch state. By using at most two conductor connections for the second communication connection, it is possible to use the same control unit interface of a welding system for connecting thereto either the welding torch described above or a conventional welding torch. In particular, the welding system may comprise a single hardware connector, such as a EURO-connector, for connecting thereto the hose package of a welding torch as described above or a conventional torch. This reduces costs and makes the welding torch more flexible to use.

Preferably, the control unit of the welding system is configured to distinguish whether a welding torch with or without communication means as described above is connected thereto. For example, the communication means of the welding torch may send a predefined recognition signal over the wired communication connection, e.g. once the wired communication connection is established, and the control unit of the welding system may be configured to identify said predefined recognition signal.

According to the present invention, the communication means of the welding torch are configured to receive a message over the second communication connection and to control the welding torch as a function of said message. For example, the welding torch may comprise a display and the communication means may be configured to cause output of user information on the display as a function of said message. This offers the possibility for the communication means to receive information about a prior transfer of an identification symbol to the second device over the second wired communication connection. Said message can in particular relate to the success or failure of the transfer, of a mapping between the transferred identification symbol and a set of welding parameters stored in the second device or a server connected thereto, or to the validity of said identification symbol. Furthermore, the welding torch may receive a message containing information about the next welding operation to be performed, such as the number of the welding operation to be performed next on the workpiece to which the previously sent identification symbol is assigned to. This can guide the welder through a complex welding sequence. Furthermore, said message may comprise information about the welding parameters selected for a next welding operation as a function of the identification symbol so that the welder may verify whether the welding system is set up correctly.

According to the present invention, the communication means of the welding torch are configured to transmit the message, which has been received over the second communication connection, over the first communication connection. In this way, the message may be received by the first device. This allows, e.g., informing the user through the first device about the status of the transfer, of a mapping between an identification symbol and welding parameters or of welding parameters.

According to a further embodiment, the control unit of the welding system is configured to control the welding system as a function of the identification symbol. Controlling the welding system may comprise selecting a welding program or welding parameters as a function of the identification symbol. Controlling the welding system may also comprise storing welding information such as welding parameters as a function of the identification symbol or in relation to the identification symbol so that parameters of the welding processes carried out with the welding system may be retrieved, for example for quality control, and assigned to a particular workpiece or welding joint of the workpiece.

According to a further embodiment, the control unit is configured to determine or to receive a welding parameter as a function of the identification symbol and to control a welding process using said welding parameter. The control unit may also be configured to determine or to receive a set of welding parameters as a function of the identification symbol and to control a welding process using said set of welding parameters. In that way, the welder may automatically configure the welding system for a next welding operation by scanning an identification symbol from a workpiece.

According to a corresponding embodiment of the method, the control unit determines or receives a welding parameter as a function of the identification symbol and controls a welding process using said welding parameter.

The welding parameter can relate to any aspect of a welding process, but in particular to the welding current amplitude or profile, the shield gas flow and/or the wire feeder speed. A set of welding parameters may also include information about the type of welding wire or the type of shielding gas to be used and the control unit may be configured to cause output of a warning message if a wrong welding wire or shielding gas is provided.

For determining a welding parameter as a function of the identification symbol, the control unit may comprise or be connected to an electronic data base on which identification symbols and assigned welding parameters are stored so that the control unit may retrieve from the data base the welding parameter(s) assigned to the identification symbol received from the welding torch. Also, the control unit may be configured to forward the identification symbol previously received to a server connected to the control unit and receive from the server in response according welding parameter(s). In this way, the electronic data base may be stored, for example, on a centralized server to which more than one welding system may be connected.

According to a further embodiment, the control unit of the welding system is configured to transmit to the welding torch a message as a function of the identification symbol or of the welding parameter. According to a corresponding embodiment of the method, a message is transmitted from the control unit to the welding torch as a function of said identification symbol or of said welding parameter. The message may contain information about the reception of an identification symbol by the control unit, the validity of said identification symbol or about welding parameters. Furthermore the welding torch may be configured to output a user message as a function of the message received from the control unit. Thus the user can be informed directly at the welding torch, which is of practical interest both in the aspect of time saving and security.

According to a further embodiment, said system further comprises a handheld device, the handheld device comprising input means for acquiring said identification symbol and communication means, wherein the communication means of the welding torch are configured to establish the first communication connection with the communication means of the handheld device. In this case, the handheld device corresponds to the first device with which the communication means are configured to establish the first wireless communication connection. The handheld device may for example be a portable computer like a tablet computer, notebook, laptop or netbook, a mobile phone, in particular a smartphone or a Personal Digital Assistant (PDA). The handheld device may also be any handheld device capable of acquiring an identification symbol, in particular by means of a scanner for a machine-readable code such as a barcode, and configured to send said identification symbol over a wireless communication connection to the welding torch. Accordingly, the input means of the handheld device preferably comprise a scanner configured for scanning a machine-readable code.

According to a further embodiment of the system, said system further comprises a data base in which a plurality of data sets, each data set containing at least one welding parameter, and a mapping between identification symbols and the plurality of data sets is stored. The mapping may be stored, for example, as a list of identification symbols in which a link to the respective data set is associated with the respective identification symbol. Alternatively, each data set may comprise a field with the assigned identification symbol. The data base may be stored in a memory of the welding system, in particular in a memory of the control unit, or on an external server connected to the welding system.

According to a further embodiment of the system, the communication means of the welding torch and the control unit of the welding system are configured to cause a method for controlling the system as described above to be performed. In particular, the communication means and the control unit may each comprise a memory with commands the execution of which on at least one processor of the communication means and of the control unit, respectively, cause the method to be performed.

There are a plurality of options for designing and developing the welding torch according to the invention, the system according to the invention and the method according to the invention. Non-limiting exemplary embodiments are described in the following in conjunction with drawings, in which
- Fig. 1: shows a schematic representation of an exemplary embodiment of a system comprising a welding system and a welding torch,
- Fig. 2: shows a schematic representation of an exemplary embodiment of a method for controlling the system of Fig. 1 and
- Fig. 3: shows a schematic representation of a data base.

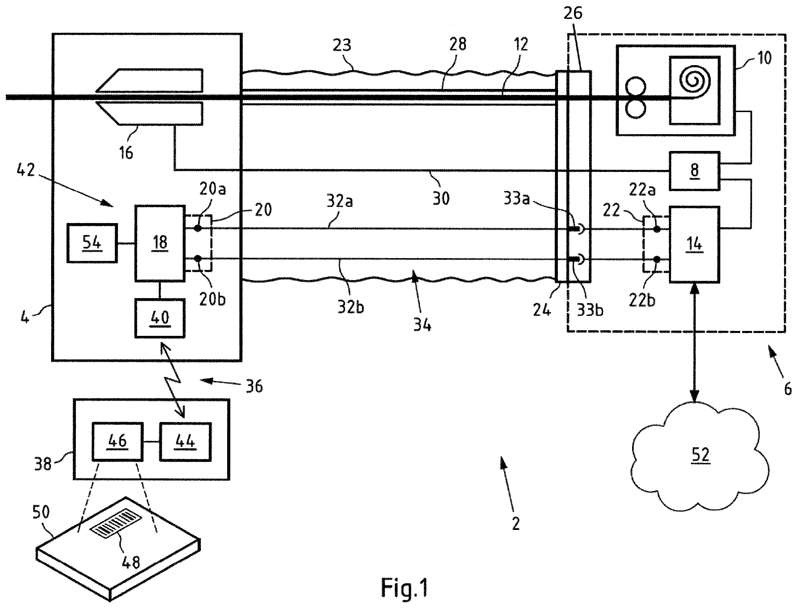

Fig. 1 shows a schematic representation of a system 2 comprising a welding torch 4 and a welding system 6.

The welding system 6 in this example is configured for GMAW-welding. The welding system 6 comprises a welding power source 8 for providing the welding power, a wire feeder 10 for providing the welding wire 12 and a control unit 14 for controlling operation of the welding system 6.

The welding torch 4 comprises a contacting tube 16 for supplying to the welding wire 12 electric energy provided by the welding power source 8. The welding torch 4 further comprises a control unit 18 and a data interface 20 with two conductor connections 20a,b for being connected to a control unit interface 22 with two conductor connections 22a,b of the control unit 14 of welding system 6.

The welding torch 4 is connected to the welding system 6 by means of a hose package 23 with a EURO-connector 24 which is coupled with a corresponding EURO-connector 26 of the welding system 6. The hose package 23 provides a channel 28 for guiding the welding wire 12 to the welding torch 4, a conductor connection 30 for the welding current and two conductor connections 32a,b with associated connector plugs 33a,b connecting data interface 20 with control unit interface 22. The hose package 23 further provides a channel (not shown) for guiding a shielding gas from a gas source (not shown) to the welding torch 4.

The control unit 18 of the welding torch 4 is configured to establish a wired communication connection 34 with control unit 14 over the two conductor connections 32a,b. The control unit 18 is furthermore configured to establish a short-range wireless communication connection 36 with a handheld device 38 by means of a Bluetooth module 40 provided in the welding torch 4. The control unit 18 with the data interface 20 and the Bluetooth module 40 together form communication means 42 of the welding torch 4.

The handheld device 38 may be a smartphone, for example, and comprises a Bluetooth module 44 and a scanner 46 configured for scanning and decoding a bar code. The welder may thus scan a bar code 48 on a workpiece 50 to be welded by means of scanner 46, cause the handheld device 38 to decode an identification symbol from the bar code 48 and send said identification symbol over the wireless communication connection 36.

The control unit 18 of the welding torch 4 is configured to receive said identification symbol from wireless communication connection 36 and transmit it over wired communication connection 34 to control unit 14 of the welding system 6.

The control unit 14 is configured to receive said identification symbol over the wired communication connection 34, to receive from a data base 52 a set of welding parameters as a function of the identification symbol and to control the welding system 6 such that a next welding operation is performed according to the received set of welding parameters.

The data base 52 may be stored in a memory of the welding system or - as shown in Fig. 1 - on a server connected to the welding system 6, for example by an Ethernet connection. For example, the control unit 14 may be configured to forward the identification symbol to a server with the data base 52 and to receive from said server an according set of parameters assigned to said identification symbol.

Control unit 14 may further be configured to send a message over the wired communication connection 34 as a function of the identification symbol and control unit 18 may be configured to receive said message and to output a corresponding user output on a display 54 of the welding torch 4, e.g. informing the welder whether the identification symbol from bar code 48 has been recognized. In the alternative, the control unit 18 may also forward the message received over wireless communication connection 36 so that the message may be output on a display of handheld device 38.

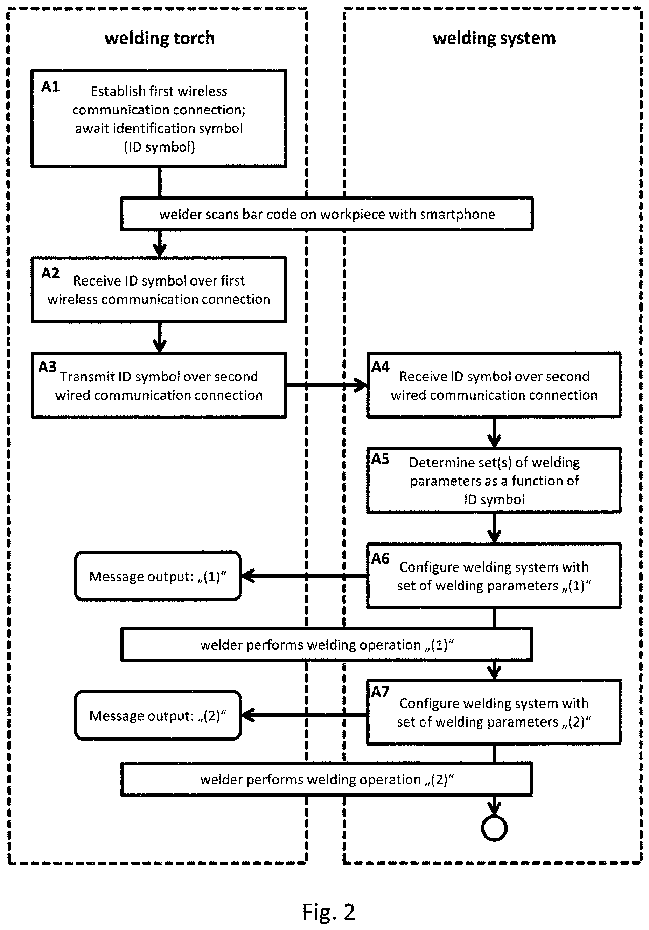

Operation of the system 2 will now be described with reference to Fig. 2.

Fig. 2 shows a schematic representation of an exemplary embodiment of a method for controlling the system 2 of Fig. 1.

In a first step A1, wireless communication connection 36 is established between the communication means 42 and handheld device 38 and the control unit 18 awaits reception of an identification symbol over wireless communication connection 36.

Once the welder has scanned barcode 48 on workpiece 50 and handheld device 38 has forwarded the identification symbol coded therein over wireless communication connection 36, control unit in step A2 receives the identification symbol over wireless communication connection 36. The identification symbol may for example be a numeric or alphanumeric code (e.g. "W35b2") that uniquely identifies workpiece 50.

In a third step A3 the communication means 42 of welding torch 4 transmit the identification symbol over wired communication connection 34, and control unit 14 of the welding system 6 receives said identification symbol in step A4. Control unit 14 may also send an acknowledgment message over communication connection 34 that the identification symbol was received in step A4.

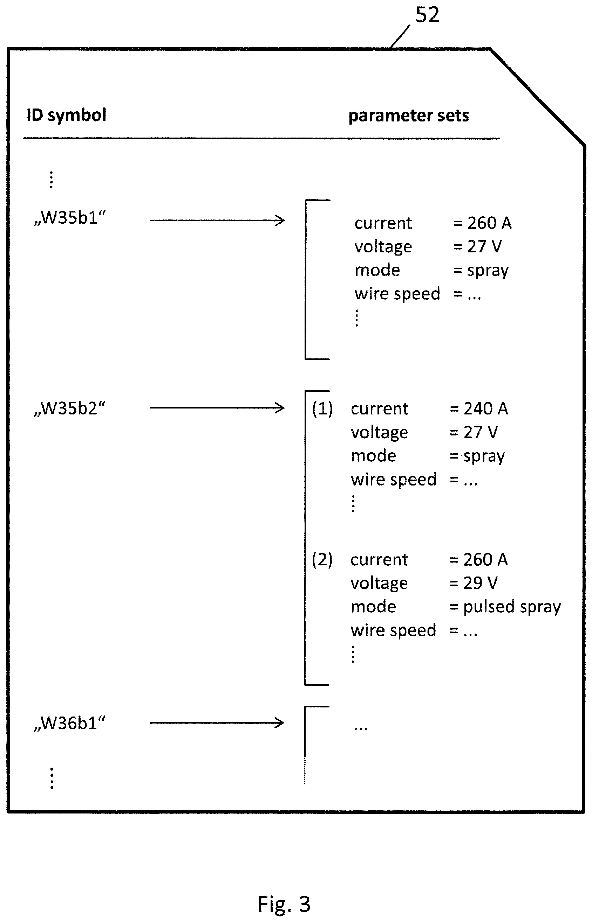

Control unit 14 then determines in step A5 a set of welding parameters by recalling from data base 52 the set of parameters assigned to the identification symbol. Fig. 3 shows schematically an excerpt from exemplary data base 52 in which identification symbols are assigned to respective sets of welding parameters. The set of parameters assigned to identification symbol "W35b2" comprises a sequence of welding parameters for two consecutive welding operations "(1)" and "(2)" to be carried out on workpiece 50.

In step A6, control unit 14 configures the welding system such that the next welding operation is carried out with the received welding parameters according to the first welding operation "(1)". Furthermore, control unit 14 sends a message over wired communication connection 34 and control unit 18 causes output of a user message informing the welder that the next welding operation is welding operation "(1)".

The welder may then perform the according welding operation on workpiece 50 with the automatically configured welding parameters.

After the welding operation is finished, control unit 14 in step A7 configures the welding system such that the next welding operation is carried out with the received welding parameters according to the second welding operation "(2)". Furthermore, control unit 14 sends a message over wired communication connection 34 and control unit 18 causes output of a user message informing the welder that the next welding operation is welding operation "(2)".

The welder may then perform the according welding operation on workpiece 50 with the automatically configured welding parameters. After that, the welder may scan with handheld device 38 a barcode of a next workpiece in order to automatically configure welding system 6.

It is clear from the above that with the welding torch, the system and the method described above, the welder may carry out even complex welding operations such as multiple welding operations on one workpiece or welding operations on many different workpieces with the designated welding parameters without having to memorize which welding parameters to use in each case.

By the communication means 42 of the welding torch 4, the welder can scan bar codes or the like even if the welding system 6 is located far away from the position of the welder. Furthermore, he may use, e.g., his smartphone for scanning the bar codes so that there is no need to include a scanner into the welding torch 4 which would make welding torch 4 complicated and expensive. For example, the welder may just install a dedicated app on his smartphone which is configured to access the camera of the smartphone to acquire an image of the barcode, to decode from the barcode image an identification symbol coded in the barcode and to access the Bluetooth module of the smartphone to send the identification symbol to welding torch 4.

## Claims

1. A welding torch (4) configured to be utilized in a welding operation, in particular to establish an electric welding arc between the welding torch (4) and a workpiece (50), the welding torch (4) comprising communication means (42),
- wherein the communication means (42) are configured to establish a first wireless communication connection (36) with a first device (38),
- wherein the communication means (42) are configured to establish a second wired communication connection (34) with a second device (6; 14),
- wherein the communication means (42) are configured to receive an identification symbol over the first communication connection (36), and
- wherein the communication means (42) are configured to transmit said identification symbol over the second communication connection (34),
**characterized**
- **in that** the communication means (42) are configured to receive a message over the second communication connection (34) and to control the welding torch (4) as a function of said message, and
- **in that** the communication means (42) are further configured to transmit over the first communication connection the message received over the second communication connection (34).

2. The welding torch (4) according to claim 1,
wherein said first communication connection (36) is a short range connection, in particular a communication connection via a specified short range communication technology.

3. The welding torch (4) according to claim 1 or 2,
comprising a data interface (20) configured for being connected to a control unit interface (22) of a control unit (14) for a welding system (6), wherein the communication means (42) are configured to establish the second communication connection (34) via said data interface (20).

4. The welding torch (4) according to claim 3,
wherein the data interface (20) comprises at most two conductor connections (20a-b) for connecting with the control unit interface (22).

5. A system (2), comprising
a welding system (6) and
a welding torch (4) according to any one of claims 1 to 4 configured for being connected to the welding system (6) for performing a welding operation, wherein the welding system (6) comprises a control unit (14) and
wherein the communication means (42) of the welding torch (4) are configured to establish the second communication connection (34) with the control unit (14) of the welding system (6) and wherein the control unit (14) of the welding system (6) is configured to receive the identification symbol over the second communication connection (34).

6. The system (2) according to claim 5,
wherein the control unit (14) of the welding system (6) is configured to control the welding system (6) as a function of the identification symbol.

7. The system (2) according to claim 6,
wherein the control unit (14) is configured to determine or to receive a welding parameter as a function of the identification symbol and to control a welding process using said welding parameter.

8. The system (2) according to claim 5 or 6,
wherein the control unit (14) is configured to transmit to the welding torch (4) a message as a function of the identification symbol or of the welding parameter.

9. The system (2) according to any one of claims 5 to 8,
comprising a handheld device (38), the handheld device (38) comprising input means (46) for acquiring said identification symbol and communication means (44), wherein the communication means (42) of the welding torch (4) are configured to establish the first communication connection (36) with the communication means (44) of the handheld device (38).

10. The system (2) according to claim 9,
wherein the input means (46) of the handheld device (38) comprise a scanner configured for scanning a machine readable code.

11. The system (2) according to any one of claims 5 to 10,
further comprising a data base (52) in which a plurality of data sets, each data set containing at least one welding parameter, and a mapping between identification symbols and the plurality of data sets is stored.

12. The system (2) according to any one of claims 5 to 11,
wherein the communication means (42) of the welding torch (4) and the control unit (14) of the welding system are configured to cause a method according to one of claims 13 to 16 to be performed.

13. A method for controlling a system (2) comprising a welding system (6) and a welding torch (4) connected thereto, in particular a system according to one of claims 5 to 12,
- in which an identification symbol is received by communication means (42) of the welding torch (4) over a first wireless communication connection (36),
- in which said identification symbol is transmitted over a second wired communication connection (34) to a control unit (14) of the welding system (6), and
- in which the control unit (14) controls the welding system (6) as a function of the identification symbol,
**characterized**
- **in that** a message is received by the communication means (42) of the welding torch (4) over the second communication connection (34),
- **in that** the communication means (42) control the welding torch (4) as a function of said message, and
- **in that** the message is transmitted by the communication means (42) over the first communication connection (36).

14. The method according to claim 13,
wherein the identification symbol contains information about the identity of a workpiece (50) and/or information about the identity of a user of the welding torch (4).

15. The method according to claim 13 or 14,
wherein the control unit (14) determines or receives a welding parameter as a function of the identification symbol and controls a welding process using said welding parameter.

16. The method according to one of claims 13 to 15,
wherein a message is transmitted from the control unit (14) to the welding torch (4) as a function of said identification symbol or of said welding parameter.

## Patentansprüche

1. Schweißbrenner (4), eingerichtet zur Nutzung in einem Schweißvorgang, insbesondere zum Aufbauen eines elektrischen Schweißlichtbogens zwischen dem Schweißbrenner (4) und einem Werkstück (50), wobei der Schweißbrenner (4) Kommunikationsmittel (42) umfasst,
- wobei die Kommunikationsmittel (42) zum Aufbauen einer ersten drahtlosen Kommunikationsverbindung (36) mit einer ersten Vorrichtung (38) eingerichtet sind
- wobei die Kommunikationsmittel (42) zum Aufbauen einer zweiten drahtgebundenen Kommunikationsverbindung (34) mit einer zweiten Vorrichtung (6; 14) eingerichtet sind,
- wobei die Kommunikationsmittel (42) zum Empfangen eines Identifikationssymbols über die erste Kommunikationsverbindung (36) eingerichtet sind, und
- wobei die Kommunikationsmittel (42) zum Übertragen des Identifikationssymbols über die zweite Kommunikationsverbindung (34) eingerichtet sind,
**dadurch gekennzeichnet,**
- **dass** die Kommunikationsmittel (42) zum Empfangen einer Nachricht über die zweite Kommunikationsverbindung (34) und zum Steuern des Schweißbrenners (4) in Abhängigkeit von der Nachricht eingerichtet sind und
- **dass** die Kommunikationsmittel (42) weiter zum Übertragen der über die zweite Kommunikationsverbindung (34) empfangenen Nachricht über die erste Kommunikationsverbindung eingerichtet sind.

2. Schweißbrenner (4) nach Anspruch 1,
wobei die erste Kommunikationsverbindung (36) eine Kurzdistanz-Verbindung ist, insbesondere eine Kommunikationsverbindung über eine spezifizierte Kurzdistanz-Kommunikationstechnologie.

3. Schweißbrenner (4) nach Anspruch 1 oder 2,
der eine Datenschnittstelle (20) umfasst, die dazu eingerichtet ist, mit einer Steuereinheitsschnittstelle (22) einer Steuereinheit (14) für ein Schweißsystem (6) verbunden zu werden, wobei die Kommunikationsmittel (42) dazu eingerichtet sind, die zweite Kommunikationsverbindung (34) über diese Datenschnittstelle (20) aufzubauen.

4. Schweißbrenner (4) nach Anspruch 3,
wobei die Datenschnittstelle (20) höchstens zwei Leiteranschlüsse (20a-b) für das Verbinden mit der Steuereinheitsschnittstelle (22) umfasst.

5. System (2), umfassend
ein Schweißsystem (6) und
einen Schweißbrenner (4) nach einem der Ansprüche 1 bis 4, der dazu eingerichtet ist, für das Durchführen eines Schweißvorgangs mit dem Schweißsystem (6) verbunden zu werden,
wobei das Schweißsystem (6) eine Steuereinheit (14) umfasst, und wobei die Kommunikationsmittel (42) des Schweißbrenners (4) dazu eingerichtet sind, die zweite Kommunikationsverbindung (34) mit der Steuereinheit (14) des Schweißsystems (6) aufzubauen, und wobei die Steuereinheit (14) des Schweißsystems (6) dazu eingerichtet ist, das Identifikationssymbol über die zweite Kommunikationsverbindung (34) zu empfangen.

6. System (2) nach Anspruch 5,
wobei die Steuereinheit (14) des Schweißsystems (6) zum Steuern des Schweißsystems (6) in Abhängigkeit von dem Identifikationssymbol eingerichtet ist.

7. System (2) nach Anspruch 6,
wobei die Steuereinheit (14) zum Bestimmen oder zum Empfangen eines Schweißparameters in Abhängigkeit von dem Identifikationssymbol und zum Steuern eines Schweißprozesses unter Verwendung des Schweißparameters eingerichtet ist.

8. System (2) nach Anspruch 5 oder 6,
wobei die Steuereinheit (14) dazu eingerichtet ist, an den Schweißbrenner (4) eine Nachricht in Abhängigkeit von dem Identifikationssymbol oder von dem Schweißparameter zu übertragen.

9. System (2) nach einem der Ansprüche 5 bis 8,
umfassend ein Handgerät (38), wobei das Handgerät (38) Eingabemittel (46) zum Erfassen des Identifikationssymbols und Kommunikationsmittel (44) umfasst, wobei die Kommunikationsmittel (42) des Schweißbrenners (4) dazu eingerichtet sind, die erste Kommunikationsverbindung (36) mit den Kommunikationsmitteln (44) des Handgeräts (38) aufzubauen.

10. System (2) nach Anspruch 9,
wobei die Eingabemittel (46) des Handgeräts (38) einen Scanner umfassen, der für das Scannen eines maschinenlesbaren Codes eingerichtet ist.

11. System (2) nach einem der Ansprüche 5 bis 10,
weiterhin umfassend eine Datenbank (52), in der mehrere Datensätze abgespeichert sind, wobei jeder Datensatz mindestens einen Schweißparameter enthält, und in der eine Zuordnung zwischen Identifikationssymbolen und den mehreren Datensätzen abgespeichert ist.

12. System (2) nach einem der Ansprüche 5 bis 11,
wobei die Kommunikationsmittel (42) des Schweißbrenners (4) und die Steuereinheit (14) des Schweißsystems dazu eingerichtet sind, das Durchführen eines Verfahrens nach einem der Ansprüche 13 bis 16 zu bewirken.

13. Verfahren zur Steuerung eines Systems (2), das ein Schweißsystem (6) und einen damit verbundenen Schweißbrenner (4) umfasst, insbesondere eines Systems nach einem der Ansprüche 5 bis 12,
- wobei von den Kommunikationsmitteln (42) des Schweißbrenners (4) über eine erste drahtlose Kommunikationsverbindung (36) ein Identifikationssymbol empfangen wird,
- wobei das Identifikationssymbol über eine zweite drahtgebundene Kommunikationsverbindung (34) an eine Steuereinheit (14) des Schweißsystems (6) übertragen wird, und
- wobei die Steuereinheit (14) das Schweißsystem (6) in Abhängigkeit von dem Identifikationssymbol steuert,
**dadurch gekennzeichnet,**
- **dass** von den Kommunikationsmitteln (42) des Schweißbrenners (4) über die zweite Kommunikationsverbindung (34) eine Nachricht empfangen wird,
- **dass** die Kommunikationsmittel (42) den Schweißbrenner (4) in Abhängigkeit von der Nachricht steuern und
- **dass** die Nachricht von den Kommunikationsmitteln (42) über die erste Kommunikationsverbindung (36) übertragen wird.

14. Verfahren nach Anspruch 13,
wobei das Identifikationssymbol Informationen über die Identität eines Werkstücks (50) und/oder Informationen über die Identität eines Benutzers des Schweißbrenners (4) enthält.

15. Verfahren nach Anspruch 13 oder 14,
wobei die Steuereinheit (14) einen Schweißparameter in Abhängigkeit von dem Identifikationssymbol bestimmt oder empfängt und einen Schweißprozess unter Verwendung des Schweißparameters steuert.

16. Verfahren nach einem der Ansprüche 13 bis 15,
wobei eine Nachricht in Abhängigkeit von dem Identifikationssymbol oder von dem Schweißparameter von der Steuereinheit (14) an den Schweißbrenner (4) übertragen wird.

## Revendications

1. Torche de soudage (4) configurée pour être utilisée dans une opération de soudage, en particulier pour établir un arc de soudage électrique entre la torche de soudage (4) et une pièce à usiner (50), la torche de soudage (4) comprenant des moyens de communication (42),
- dans laquelle les moyens de communication (42) sont configurés pour établir une première connexion de communication sans fil (36) avec un premier dispositif (38),
- dans laquelle les moyens de communication (42) sont configurés pour établir une deuxième connexion de communication filaire (34) avec un deuxième dispositif (6 ; 14),
- dans laquelle les moyens de communication (42) sont configurés pour recevoir un symbole d'identification via la première connexion de communication (36), et
- dans laquelle les moyens de communication (42) sont configurés pour transmettre ledit symbole d'identification via la deuxième connexion de communication (34),
**caractérisé**
- **en ce que** les moyens de communication (42) sont configurés pour recevoir un message via la deuxième connexion de communication (34) et pour commander la torche de soudage (4) en fonction dudit message, et
- **en ce que** les moyens de communication (42) sont en outre configurés pour transmettre via la première connexion de communication le message reçu via la deuxième connexion de communication (34).

2. Torche de soudage (4) selon la revendication 1,
dans laquelle ladite première connexion de communication (36) est une connexion à courte portée, en particulier une connexion de communication via une technologie de communication à courte portée spécifiée.

3. Torche de soudage (4) selon la revendication 1 ou 2,
comprenant une interface de données (20) configurée pour être connectée à une interface d'unité de commande (22) d'une unité de commande (14) pour un système de soudage (6), dans laquelle les moyens de communication (42) sont configurés pour établir la deuxième connexion de communication (34) via ladite interface de données (20).

4. Torche de soudage (4) selon la revendication 3,
dans laquelle l'interface de données (20) comprend au plus deux connexions conductrices (20a-b) pour la connexion avec l'interface de l'unité de commande (22).

5. Système (2), comprenant
un système de soudage (6) et
une torche de soudage (4) selon l'une quelconque des revendications 1 à 4 configurée pour être connectée au système de soudage (6) pour effectuer une opération de soudage, dans lequel le système de soudage (6) comprend une unité de commande (14) et
dans lequel les moyens de communication (42) de la torche de soudage (4) sont configurés pour établir la deuxième connexion de communication (34) avec l'unité de commande (14) du système de soudage (6) et dans lequel l'unité de commande (14) du système de soudage (6) est configurée pour recevoir le symbole d'identification via la deuxième connexion de communication (34).

6. Système (2) selon la revendication 5,
dans lequel l'unité de commande (14) du système de soudage (6) est configurée pour contrôler le système de soudage (6) en fonction du symbole d'identification.

7. Système (2) selon la revendication 6,
dans lequel l'unité de commande (14) est configurée pour déterminer ou recevoir un paramètre de soudage en fonction du symbole d'identification et pour commander un processus de soudage en utilisant ledit paramètre de soudage.

8. Système (2) selon la revendication 5 ou 6,
dans lequel l'unité de commande (14) est configurée pour transmettre à la torche de soudage (4) un message en fonction du symbole d'identification ou du paramètre de soudage.

9. Système (2) selon l'une quelconque des revendications 5 à 8,
comprenant un dispositif portatif (38), le dispositif portatif (38) comprenant des moyens d'entrée (46) pour acquérir ledit symbole d'identification et des moyens de communication (44), dans lequel les moyens de communication (42) de la torche de soudage (4) sont configurés pour établir la première connexion de communication (36) avec les moyens de communication (44) du dispositif portatif (38).

10. Système (2) selon la revendication 9,
dans lequel les moyens d'entrée (46) du dispositif portatif (38) comprennent un scanner configuré pour scanner un code lisible par machine.

11. Système (2) selon l'une quelconque des revendications 5 à 10,
comprenant en outre une base de données (52) dans laquelle sont stockés une pluralité d'ensembles de données, chaque ensemble de données contenant au moins un paramètre de soudage, et un mappage entre des symboles d'identification et la pluralité d'ensembles de données.

12. Système (2) selon l'une quelconque des revendications 5 à 11,
dans lequel les moyens de communication (42) de la torche de soudage (4) et l'unité de commande (14) du système de soudage sont configurés pour provoquer la mise en œuvre d'un procédé selon l'une des revendications 13 à 16.

13. Procédé de commande d'un système (2) comprenant un système de soudage (6) et une torche de soudage (4) qui y est connectée, en particulier un système selon l'une des revendications 5 à 12,
- dans lequel un symbole d'identification est reçu par les moyens de communication (42) de la torche de soudage (4) via une première connexion de communication sans fil (36),
- dans lequel ledit symbole d'identification est transmis via une deuxième connexion de communication filaire (34) à une unité de commande (14) du système de soudage (6), et
- dans lequel l'unité de commande (14) commande le système de soudage (6) en fonction du symbole d'identification,
**caractérisé**
- **en ce qu'**un message est reçu par les moyens de communication (42) de la torche de soudage (4) via la deuxième connexion de communication (34),
- **en ce que** les moyens de communication (42) commandent la torche de soudage (4) en fonction dudit message, et
- **en ce que** le message est transmis par les moyens de communication (42) via la première connexion de communication (36).

14. Procédé selon la revendication 13,
dans lequel le symbole d'identification contient des informations sur l'identité d'une pièce à usiner (50) et/ou des informations sur l'identité d'un utilisateur de la torche de soudage (4).

15. Procédé selon la revendication 13 ou 14,
dans lequel l'unité de commande (14) détermine ou reçoit un paramètre de soudage en fonction du symbole d'identification et commande un processus de soudage en utilisant ledit paramètre de soudage.

16. Procédé selon l'une des revendications 13 à 15,
dans lequel un message est transmis de l'unité de commande (14) à la torche de soudage (4) en fonction dudit symbole d'identification ou dudit paramètre de soudage.
